# EUROPEAN PATENT APPLICATION

(11) **EP 1 772 246 A2**
(43) Date of publication of application: **11.04.2007**
(21) Application number: 06115177.5
(22) Date of filing: 08.06.2006
(51) Int. Cl.: B29C 35/00, B29C 45/73

(54) **Mold temperature regulating apparatus**

(30) Priority: 22.09.2005 JP 2005276249; 11.04.2006 JP 2006109118
(71) Applicant: Star Seiki Co., Ltd., Aichi 467-0827 (JP)
(72) Inventor: NAGASAKA, Tatsuhiko STAR SEIKI CO LTD, Niwa-gun Aichi (JP)
(74) Representative: TBK-Patent

(57) **Abstract**

A mold temperature regulating apparatus (1) includes a casing (5) which can be located indoors. Within the casing (5), there are installed a heating tank (12a,12b) through which a temperature-regulating medium returned from a mold passes, a cooling tank (15) for storing the common temperature-regulating medium (4) returned from the mold (M), a heater (13a,13b) for heating the temperature-regulating medium (4) in the heating tank (12a,12b),
a cooling system (16) for cooling the temperature-regulating medium (4) in the cooling tank, a confluence pump (17) that allows the temperature-regulating medium (4) cooled in the cooling tank (15) to join the temperature-regulating medium in the heating tank, and a medium-feeding pump (14a,14b) for feeding out the temperature-regulating medium (4) discharged from the heating tank (12a,12b) into the mold. The cooling system (16) is configured to indirectly cool the temperature-regulating medium (4) by a different cooling medium circulated in the casing (5).

## Description

The present invention relates to an apparatus that regulates a temperature (hereinafter, sometimes called "temperature-regulation") of a mold by circulating a temperature-regulating medium into a mold for a plastic molding machine and the like.

This type of the mold temperature regulating apparatus includes both of a heating system and a cooling system of the temperature-regulating medium, and regulates the temperature of the temperature-regulating medium by heating or cooling the temperature-regulating medium as necessary. As the mold temperature regulating apparatus, the following types are given particularly in a type of the cooling system.

### (1) Air cooling type

In Fig. 1 of Japanese Laid-open Patent Publication Number hei 05-131455 (No. JP-A-5-131455), there is described a mold temperature regulating apparatus in an air cooling type, which has a heat exchanger that air-cools a mold by jetting a compressed air to a temperature-regulating pipe through which the temperature-regulating medium to be flown into the mold passes. The compressed air is supplied from a compressor outside the apparatus through an air pipe.

### (2) Direct water-cooling type

In Fig. 9 of Japanese Laid-open Patent Publication Number hei 11-286019 (No. JP-A-11-286019), there is described a mold temperature regulating apparatus in a direct water-cooling type, which directly water-cools a mold by additionally pouring cooling water into a medium tank which stores a temperature-regulating medium to be flown into the mold. The cooling water is supplied from the outside of the apparatus through a supply pipe, and excessive water in the medium tank is drained to the outside through a drain pipe.

### (3) Indirect water-cooling type

In Fig. 2 of JP-A-5-131455, there is described a mold temperature regulating apparatus in an indirect water-cooling type, which includes a heat exchanger that indirectly water-cools a mold by contacting the cooling water to the outer surface of a temperature-regulating pipe through which a temperature-regulating medium to be flown into the mold passes. The cooling water is supplied from the outside of the apparatus through a supply pipe, and drained to the outside through a drain pipe.

In Figs. 1 to 3 of JP-A-11-286019, similar mold temperature regulating apparatus is described, wherein the cooling water is circulated between the mold temperature regulating apparatus and an indoor unit, and in the indoor unit, the cooling water is cooled by a cooling medium such as HCFC circulated between the indoor unit and an outdoor unit.

In the air cooling type described above (1), there is a difficulty that the cooling speed is slow. In the direct water-cooling type described above (2), the temperature-regulating medium and the cooling water are mixed with each other, and tap water or well water is often used for both. Therefore, there is a difficulty that scales due to the tap water or the well water may adhere on various portions of the mold or the mold temperature regulating apparatus, or rust or corrosion may be caused. Moreover, facilities for the tap water or the well water are necessary, resulting in a condition where the mold temperature regulating apparatus is connected with water piping. Furthermore, when clear water that hardly generates the scale adherence is intended to be used, equipment for producing the clear water from the tap water or the well water is necessary.

In the indirect water-cooling type described above (3), while the temperature-regulating medium and the cooling water are not mixed, the facilities for the tap water or the well water and furthermore the equipment for producing the clear water are still necessary, and the mold-temperature regulating apparatus is in a condition where it is connected with water piping. Moreover, in the apparatus requiring the outdoor unit, facilities become large, in addition, the apparatus is hard to be handled in layout change and the like.

An object of the invention is to solve the problems described above and to provide a mold temperature regulating apparatus which allows a temperature-regulating medium to circulate in a closed manner between a mold and the mold temperature regulating apparatus that can be located indoors, and allows a cooling medium to circulate within the mold temperature regulating apparatus in a closed manner, therefore does not need another liquid to be supplied from outside, thereby contributes to improvement in simplification, compactification and handling of equipment.

In order to achieve the object described above, according to the invention, there is provided a mold temperature regulating apparatus for regulating a temperature of a mold by circulating a temperature-regulating medium into the mold, which comprises;
a casing which can be located indoors, a heating tank through which the temperature-regulating medium returned from the mold passes, a cooling tank for storing a common temperature-regulating medium returned from the mold, a heater for heating the temperature-regulating medium in the heating tank,
a cooling system for cooling the temperature-regulating medium in the cooling tank, a confluence pump that allows the cooled temperature-regulating medium in the cooling tank to join the temperature-regulating medium in the heating tank, and a medium-feeding pump for feeding out the temperature-regulating medium discharged from the heating tank into the mold. The heating tank, the cooling tank, the heater, the cooling system, the confluence pump, and the medium-feeding pump are installed in the casing. The cooling system is configured to indirectly (without mixing) cool the temperature-regulating medium by a different cooling medium (different from the temperature-regulating medium) circulated in the casing.

Here, as the temperature-regulating medium, a liquid (other than water) which generates few scale adherence and has rust prevention and corrosion prevention properties is preferable, and a propylene glycol aqueous solution can be exemplified. As the different cooling medium, a medium desirably has excellent efficiency compared with the temperature-regulating medium, and various types of chlorofluorocarbon gases or chlorofluorocarbon-free medium can be used, R407C or a chlorofluorocarbon-free medium having ozone depletion potential of zero is particularly preferable.

In relative comparison between the heating tank and the cooling tank, preferably the heating tank has relatively small capacity, and the cooling tank has relatively large capacity. When the heating tank has small capacity, the temperature-regulating medium in the tank can be promptly heated for temperature-regulation. When the cooling tank has large capacity, even if the temperature-regulating medium at high temperature is flown into the tank, the temperature is not rapidly increased (accumulator operation).

At least two heating tanks are installed in the casing, so that at least two systems of temperature-regulating circuits are provided, thereby at least two split molds can be separately subjected to temperature-regulation.

Temperature of the temperature-regulating medium in the cooling tank is preferably kept constant. If the temperature is constant, when the temperature-regulating medium in the cooling tank is allowed to join the temperature-regulating medium in the heating tank, variation in temperature-regulation is eliminated. The temperature of the temperature-regulating medium in the cooling tank is preferably 5 to 20°C.

Moreover, a sub temperature regulating circuit may be provided, which feeds out the cooled temperature-regulating medium in the cooling tank into equipment other than the mold (for example, a lower portion of a hopper of a molding machine).

Furthermore, in the sub temperature regulating circuit, a sub heater for heating the aforementioned temperature-regulating medium fed out into the equipment other than the mold by using heat generated in the aforementioned cooling system may be provided. The sub heater can be exemplified, which transfers heat of a cooling medium heated by a compressor provided in the cooling system to the temperature-regulating medium in the sub temperature regulating circuit. As a structure of the sub heater, a cylindrical sleeve that is armored on piping for the temperature-regulating medium and thus configures a concentric double pipe with the piping, a spiral tube that is armored on the piping for the temperature-regulating medium in a winding way and the like can be exemplified.

According to the mold temperature regulating apparatus of the invention, the temperature-regulating medium is circulated in a closed manner between the mold and the mold temperature regulating apparatus which can be located indoors (a portion to be located in the outdoors is unnecessary), and the cooling medium is circulated within the mold-temperature regulating apparatus in a closed manner, and therefore another liquid need not be supplied from outside. Consequently, there is attained an excellent advantage of contributing to improvement in simplification, compactification and handling of equipment. Moreover, only the liquid which generates few scale adherence and has rust prevention and corrosion prevention properties can be easily used for the temperature-regulating medium, and consequently adhesion of scales on various portions of the mold or the mold temperature regulating apparatus or rust or corrosion can be prevented.

Further objects of this invention will become evident upon an understanding of the illustrative embodiments described below. Various advantages not specifically referred to herein but within the scope of the instant invention will occur to one skilled in the art upon practice of the presently disclosed invention. The following examples and embodiments are illustrative and not seen to limit the scope of the invention.
Fig. 1 is a layout view of a mold temperature regulating apparatus according to an embodiment of the invention;
Figs. 2A to 2C show the mold temperature regulating apparatus, wherein Fig. 2A is a front view, Fig. 2B is a right side view, and Fig. 2C is a plane view;
Fig. 3 is a circuit diagram of the mold temperature regulating apparatus during heating operation;
Fig. 4 is a circuit diagram of the mold temperature regulating apparatus during cooling operation;
Fig. 5 is a circuit diagram of the mold temperature regulating apparatus during operation of collecting a temperature-regulating medium in the mold;
Fig. 6 is a circuit diagram of a modification 1 of the mold-temperature regulating apparatus in which a sub temperature-regulating circuit is modified; and
Fig. 7 is a circuit diagram of a modification 2 of the same.

A mold temperature regulating apparatus 1 is provided with a casing 5 which can be located indoors. Within the casing 5, there are installed: two heating tanks 12a, 12b through which the temperature-regulating medium generating few scale adherence and having rust prevention and corrosion prevention properties separately returned from a movable mold A and a stationary mold B passes; a cooling tank 15 for storing a common temperature-regulating medium 4 returned from the mold M; heaters 13a, 13b for heating the temperature-regulating medium 4 in the heating tanks 12a, 12b; a cooling system 16 for cooling the temperature-regulating medium 4 in the cooling tank 15; a confluence pump 17 for allowing the cooled temperature-regulating medium 4 in the cooling tank 15 to join the temperature-regulating medium 4 in the heating tanks 12a, 12b; and two medium-feeding pumps 14a, 14b for feeding out the temperature-regulating medium 4 discharged from the heating tanks 12a, 12b into the movable mold A and the stationary mold B separately. The cooling system 16 is configured to indirectly cool the aforementioned temperature-regulating medium 4 by a different cooling medium which circulates within the casing 5.

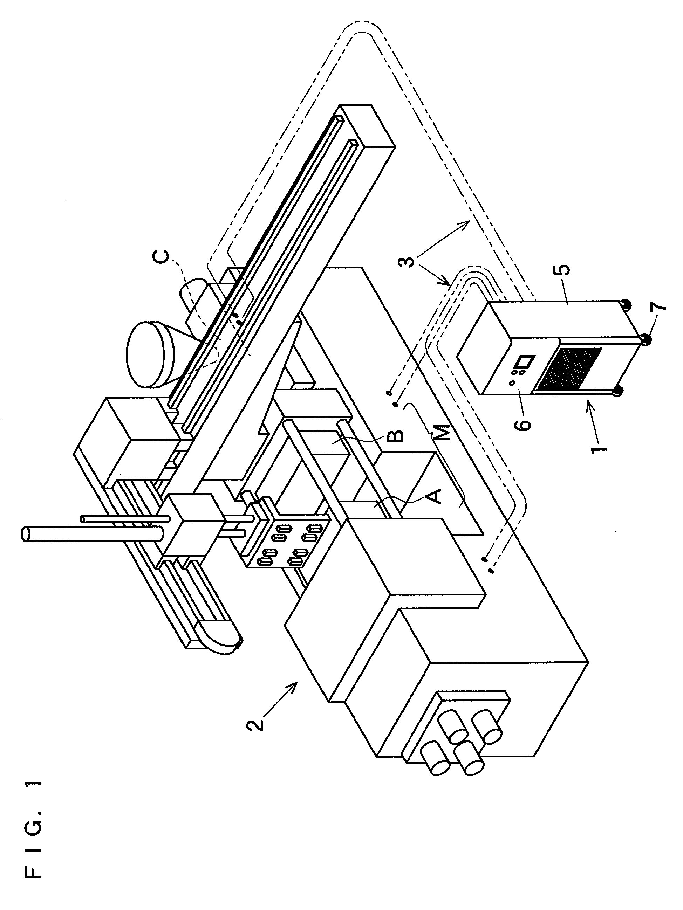

Next, an embodiment of the invention will be described according to Figs. 1 to 5. As shown in Fig. 1, the mold temperature regulating apparatus 1 of the embodiment is located near an injection molding machine 2 of plastic products. In a molding plant equipped with a plurality of injection molding machines 2, the mold temperature regulating apparatus 1 is located for each of molding machines 2. A circulating pipe line 3 of the temperature-regulating medium is piped between the mold temperature regulating apparatus 1 and the injection molding machine 2. The mold temperature regulating apparatus 1 circulates the temperature-regulating medium into a mold M in the injection molding machine, and regulates the temperature of the mold M depending on material or a kind of the plastic products.

More specifically, the apparatus 1 includes two systems of temperature-regulating circuits so that each temperature of the movable mold A and the stationary mold B, each of which dividedly forms the mold M, can be independently regulated. Furthermore, in addition to the circuits for regulating the mold temperature, the apparatus 1 have a sub temperature -regulating circuit for a lower portion C of a hopper, which regulates the temperature of the lower portion C of the hopper, and therefore the circulating pipe line 3 is also piped to the lower portion C of the hopper.

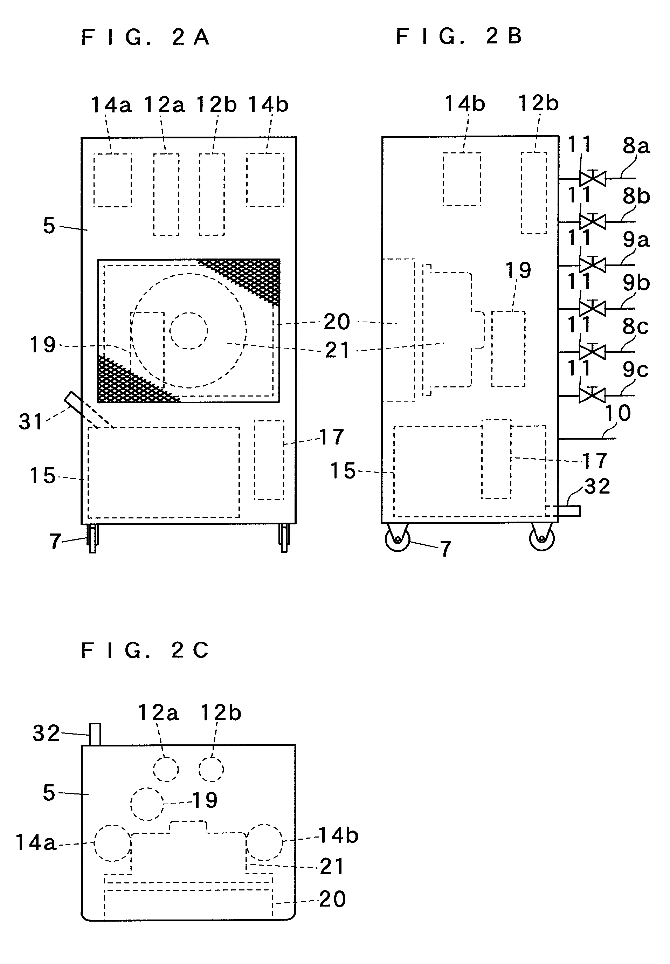

As shown in Fig. 1 and Figs. 2A to 2C, the mold temperature regulating apparatus is provided with the casing 5 which can be located indoors. The casing 5 is, for example, in a square box shape. On a front face of the casing 5, an operational panel 6 is provided, and casters 7 are attached to a bottom face of the casing 5.

On a back face of the casing 5, there are arranged two medium-return manifolds 8a, 8b for receiving a temperature-regulating medium 4 separately returned from the movable mold A and the stationary mold B, two medium-feeding manifolds 9a, 9b for feeding out the temperature-regulating medium 4 separately into the movable mold A and the stationary mold B, a medium-return manifold 8c for receiving the temperature-regulating medium 4 returned from the lower portion C of the hopper, a medium-feeding manifold 9c for feeding out the temperature-regulating medium 4 to the lower portion C of the hopper of the molding machine, and an air inlet 10 for introducing pressurized air. Hand valves 11 are provided in the manifolds 8a, 8b, 8c, 9a, 9b, and 9c respectively. A pressurized-air supply source P such as a compressor is connected to the air inlet 10.

Within the casing 5, there are provided: two heating tanks 12a, 12b having relatively small capacity through which the temperature-regulating medium 4 separately returned from the movable mold A and the stationary mold B passes; two heaters 13a, 13b inserted into respective heating tanks 12a, 12b to heat the temperature-regulating medium 4 in the tanks; the cooling tank 15 having relatively large capacity for storing the common temperature-regulating medium 4 returned from the movable mold A and the stationary mold B; the cooling system 16 for cooling the temperature-regulating medium 4 stored in the cooling tank 15; the confluence pump 17 for feeding the cooled temperature-regulating medium 4 in the cooling tank 15 to the heating tanks 12a, 12b, and allowing the cooled temperature-regulating medium 4 to join the temperature-regulating medium in the heating tanks 12a, 12b; two medium-feeding pumps 14a, 14b for feeding out the temperature-regulating medium 4 discharged from the heating tanks 12a, 12b into the movable mold A and the stationary mold B separately; and others including valves and a temperature sensor which will be described later.

The cooling system 16 is configured to indirectly cool the aforementioned temperature-regulating medium 4 by the different cooling medium which circulates within the casing 5. Specifically, the cooling system 16 is configured by a heat exchanger 18 provided within the cooling tank 15, a compressor 19 provided outside the cooling tank 15, a condenser 20 and a fan 21. The heat exchanger 18, the compressor 19, and the condenser 20 are connected in a circuit form by piping. In the circuit, R407C having the ozone depletion potential of zero is enclosed as a cooling medium. Other than R407, various cooling medium such as HCFC and the chlorofluorocarbon-free medium can be naturally used. The cooling medium circulates along the circuits by flowing through the heat exchanger 18, the compressor 19, the condenser 20 and the heat exchanger 18 in this order.

In a layout within the casing 5, the cooling tank 15 and the confluence pump 17 are disposed in a bottom portion (this lowers the center of gravity) ; the compressor 19, the condenser 20, and the fan 21 are disposed in a middle height portion; and heating pumps 12a, 12b and medium-feeding pumps 14a, 14b are disposed in an upper portion. An air-permeable net plate is provided on a front face of the condenser 20 in the front of the casing 5.

A heating portion of the temperature-regulating circuit in one system for regulating the temperature of the movable mold A will be described below. An inlet of the heating tank 12a is connected to a hand valve 11 of the medium-return manifold 8a via a hand valve 22a (ball valve) by piping. A temperature sensor 24a, a medium-feeding pump 14a, a check valve 25a, and a hand valve 11 of the medium-feeding manifold 9a are connected to an outlet of the heating tank 12a in this order by piping. Between an outlet port of the medium-feeding pump 14a and the inlet of the heating tank 12a, a bypass 36a is provided using piping that is thinner (large in flow resistance) than piping in other sites.

A heating portion of the temperature-regulating circuit in one system for regulating the temperature of the stationary mold B will be described below. An inlet of the heating tank 12b is connected to a hand valve 11 of the medium-return manifold 8b via a hand valve 22b (ball valve) by piping. A temperature sensor 24b, a medium-feeding pump 14b, a check valve 25b, and a hand valve 11 of the medium-feeding manifold 9b are connected to an outlet of the heating tank 12b in this order by piping. Between an outlet port of the medium-feeding pump 14b and the inlet of the heating tank 12b, a bypass 36b is provided using piping that is thinner (large in flow resistance) than piping in other sites.

A cooling portion of the temperature-regulating circuit in these both systems will be described below. An inlet of the cooling tank 15 is connected to the hand valve 11 of the medium-return manifold 8a via a check valve 23a by piping. An inlet of the cooling tank 15 is connected to a hand valve 11 of the medium-return manifold 8b via a check valve 23b by piping. A temperature sensor 26, the confluence pump 17, and a common electromagnetic valve 27 are connected to an outlet of the cooling tank 15 in this order by piping.

To the common electromagnetic valve 27, a mixing port of the heating tank 12a is connected via an electromagnetic valve 28a for cooling by piping, and a mixing port of the heating tank 12b is also connected via an electromagnetic valve 28b for cooling by piping.

A sub temperature-regulating circuit for regulating the temperature of the lower portion C of the hopper will be described below. An inlet of the cooling tank 15 is connected to the medium-return manifold 8c by piping. To the confluence pump 17 for the outlet of the cooling tank 15, the medium-feeding manifold 9c is connected via a check valve 29 and an electromagnetic valve 30 by piping. Between the medium-return manifold 8c and the medium-feeding manifold 9c, a bypass 37 is provided using piping that is thinner (large in flow resistance) than piping in other sites.

In the two systems of temperature-regulating circuits (a heating portion and a cooling portion) for the movable mold A and the stationary mold B, and the sub temperature-regulating circuit for the lower portion C of the hopper, as a common temperature-regulating medium, a propylene glycol aqueous solution is enclosed, which generates few scale adherence and has rust prevention and corrosion prevention. Moreover, as shown in Fig. 2, a nozzle 31 for previously pouring the temperature-regulating medium 4 into the cooling tank 15 is provided on a side face of the casing 5, and a drain port 32 for draining the temperature-regulating medium 4 from the cooling tank 15 in exchange of the medium and the like is provided in a lower portion of the back face of the casing 5.

A collection circuit for collecting the temperature-regulating medium 4 within the movable mold A and the stationary mold B will be described below. An air inlet 10 is connected between check valves 25a, 25b with respect to the heating tanks 12a, 12b and the hand valves 11 of the medium-feeding manifolds 9a, 9b respectively via an electromagnetic valve 34 for air and a check valve 35. The medium-feeding manifolds 9a, 9b are connected by piping to the inlet of the cooling tank 15 via the movable mold A and the stationary mold B, the medium-return manifolds 8a, 8b, and the check valves 23a, 23b through the circulating pipe line 3.

Operation of the mold temperature regulating apparatus 1 configured as above will be described as follows.

### [Temperature regulation of cooling medium and temperature-regulating medium]

While the temperature of the temperature-regulating medium 4 within the cooling tank 15 is monitored by the temperature sensor 26, the compressor 19 in the cooling system 16 is controlled to make a value of cooling temperature of the heat exchanger 18 a predetermined value. Thereby a value of temperature of the temperature-regulating medium 4 is kept to be a fixed value which is set within a range of, for example, 5 to 20°C. Since the cooling medium in the cooling system 16 is air-cooled by the fan 21 in the condenser 20, the embodiment can be regarded as the air cooling type in that respect.

Then, while the temperature of the temperature-regulating medium 4 within the heating tanks 12a, 12b is monitored by temperature sensors 24a, 24b, the following heating operation and cooling operation are performed. Thereby a value of the temperature of the temperature-regulating medium 4 is made to be a setting value which is set within a range of, for example, 5 to 95°C.

### [Heating operation]

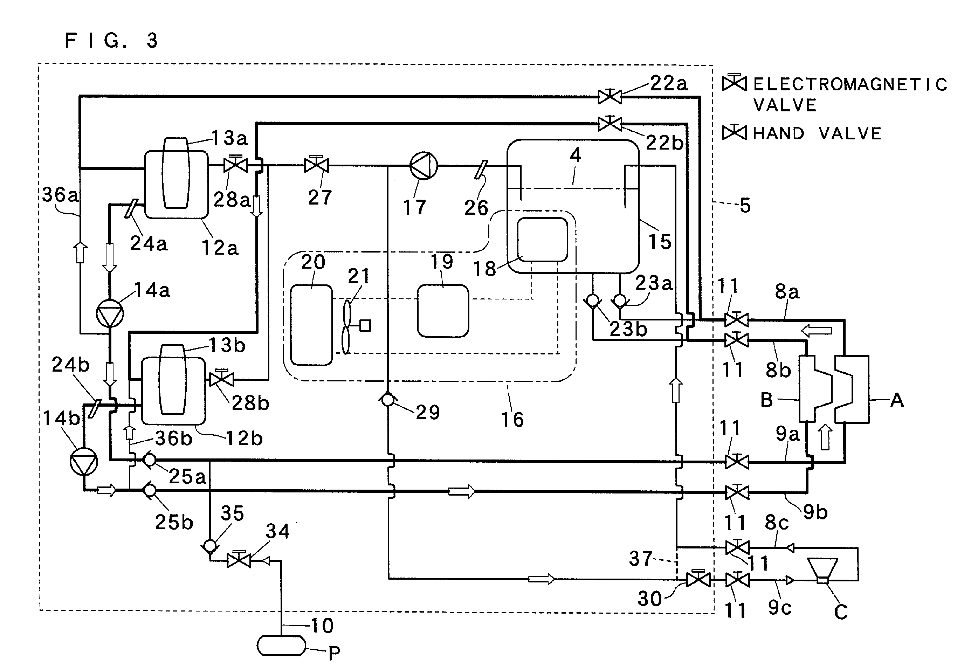

As shown particularly by a thick line in Fig. 3, hand valves 11, 22a, 22b are opened, electromagnetic valves 28a, 28b for cooling (furthermore, the common electromagnetic valve 27 as necessary) are closed, and the medium-feeding pumps 14a, 14b are operated, thereby the temperature-regulating medium 4 separately returned from the movable mold A and the stationary mold B is fed into the heating tanks 12a, 12b through the medium-return manifolds 8a, 8b, and heated by the heaters 13a, 13b, and then fed out into the movable mold A and the stationary mold B through the medium-feeding manifolds 9a, 9b. When the temperature of the temperature-regulating medium 4 returned from the movable mold A and the stationary mold B is lower than the setting value, the temperature of the temperature-regulating medium 4 is increased to be kept at the setting value only by this heating operation, so that the temperature of each of the movable mold A and the stationary mold B is regulated. Since the two systems of temperature-regulating circuits are provided as described before, the temperature of only one of the movable mold A and the stationary mold B can be regulated by operating only one of the medium-feeding pumps 14a, 14b.

### [Cooling operation]

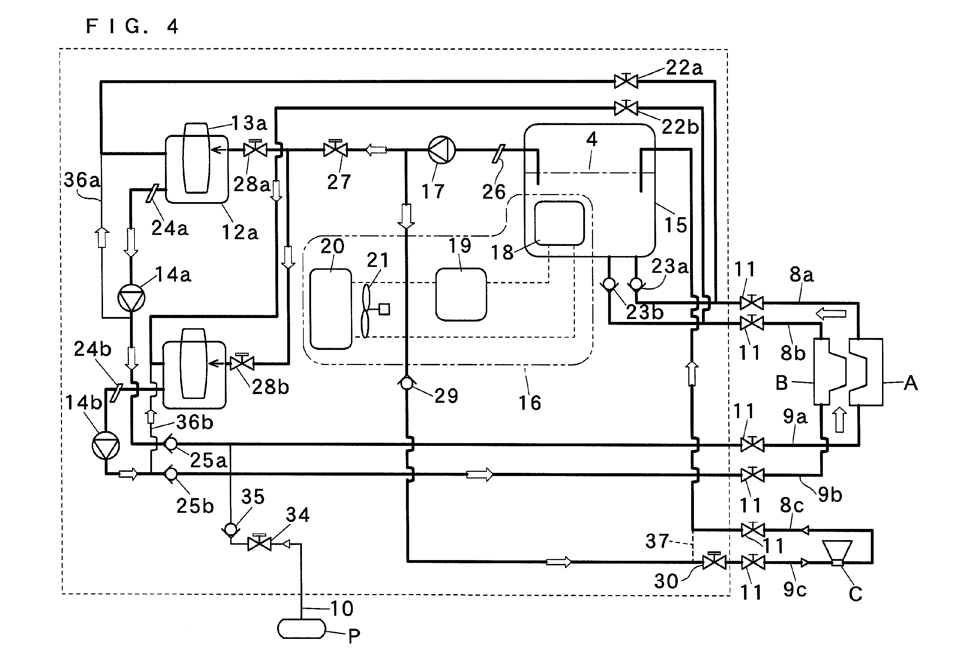

As shown particularly by a thick line in Fig. 4, while the hand valves 11, 22a, 22b are opened, the electromagnetic valves 28a, 28b for cooling and the common electromagnetic valve 27 are opened, and while the medium-feeding pumps 14a, 14b are operated, the confluence pump 17 is operated, thereby the temperature-regulating medium 4 separately returned from the movable mold A and the stationary mold B is fed into the heating tanks 12a, 12b through the medium-return manifolds 8a, 8b, in addition, flown into the cooling tank 15 via check valves 23a, 23b. Since a large amount of cooled temperature-regulating medium 4 has been stored within the cooling tank 15, even if the temperature-regulating medium 4 is newly flown thereinto, the temperature of the stored temperature-regulating medium 4 is substantially not changed (accumulator operation).

Then, the cooled temperature-regulating medium 4 from the cooling tank 15 is poured into the heating tanks 12a, 12b, and joined the temperature-regulating medium 4 flown via the hand valves 22a, 22b (operation of the heaters 13a, 13b is stopped), and then fed out into the movable mold A and the stationary mold B through the medium-feeding manifolds 9a, 9b. Typically, since the temperature of temperature-regulating medium 4 returned from the movable mold A and the stationary mold B is higher than the setting value, the temperature of temperature-regulating medium 4 is decreased to be kept at the setting value only by the cooling operation by control of opening and closing of the electromagnetic valves 28a, 28b for cooling (or by the cooling operation in addition to the aforementioned heating operation), so that the temperature of each of the movable mold A and the stationary mold B is regulated. Since the two systems of temperature-regulating circuits are provided as described before, only one of the electromagnetic valves 28a, 28b for cooling can be operated.

### [Cooling operation of lower portion C of hopper]

As shown particularly by a thick line in Fig. 4, an electromagnetic valve 30 of the sub temperature-regulating circuit is opened, thereby the cooled temperature-regulating medium 4 from the cooling tank 15 can be fed out through the medium-feeding manifold 9c into the lower portion C of the hopper to cool the lower portion C of the hopper into suitable temperature. When the electromagnetic valve 30 is closed so that the temperature-regulating medium 4 is not fed out into the lower portion C of the hopper, the temperature-regulating medium 4 is circulated into the cooling tank 15 via the bypass 37 using thin piping.

### [Collection operation of temperature-regulating medium within mold]

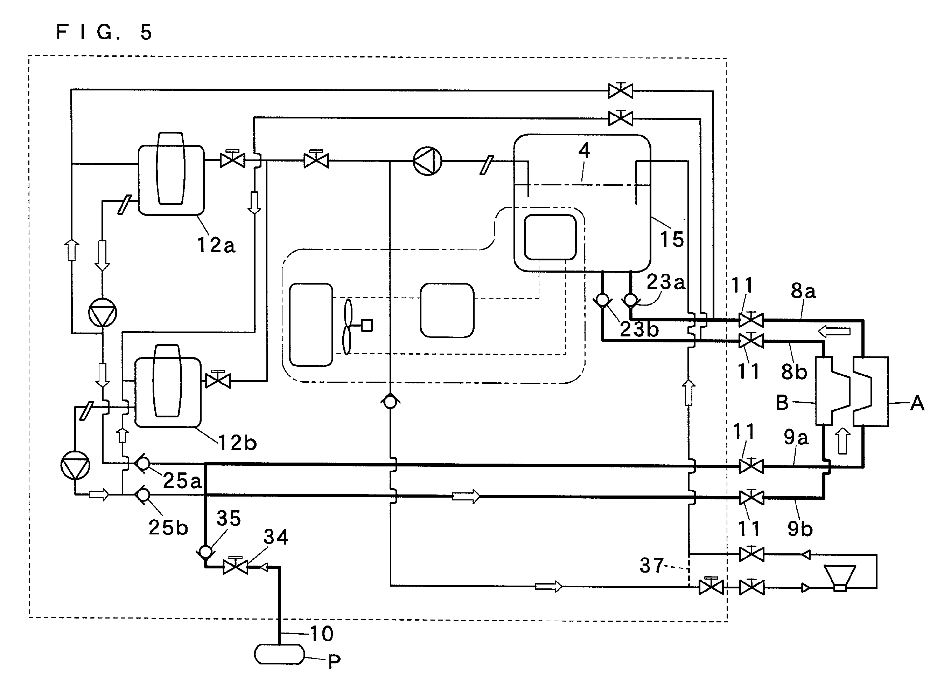

When the temperature-regulating medium 4 within the mold M is desired to be collected as in a case of exchange of the mold, as shown particularly by a thick line in Fig. 5, the hand valves 22a, 22b are closed, the electromagnetic valve 34 for air is opened, and then pressurized air is fed into the movable mold A and the stationary mold B through the medium-feeding manifolds 9a, 9b. Thereby the temperature-regulating medium 4 within the movable mold A and the stationary mold B can be collected into the cooling tank 15. Even if the pressurized air has passed the check valves 25a, 25b, the temperature-regulating medium 4 in piping is returned into the heating tanks 12a, 23b via bypasses 36a, 36b using thin piping.

Since the mold temperature regulating apparatus of the embodiment is configured as above, the following advantages are exhibited.
(a) The temperature-regulating medium 4 is circulated in a closed manner between the mold M and the mold temperature regulating apparatus 1 which can be located indoors, and the cooling medium is circulated within the mold temperature regulating apparatus 1 in a closed manner, and therefore another liquid need not be supplied from outside. Consequently, it is possible to contribute to improvement in simplification, compactification and handling of equipment.
(b) The temperature-regulating medium 4 which generates few scale adherence and has rust prevention and corrosion prevention properties is commonly used, and part of the temperature-regulating medium 4 to be circulated into the movable mold A and the stationary mold B is stored in the cooling tank, and the temperature-regulating medium 4 is cooled indirectly (without mixing) by an efficient cooling system using the different cooling medium, and then the cooled temperature-regulating medium 4 is joined the temperature-regulating medium 4 returned from the movable mold A and the stationary mold B, thereby temperature-regulation is performed. Thus, adhesion of scales on various portions of the mold M or the mold temperature regulating apparatus 1 can be prevented. Moreover rust or corrosion can be prevented. Furthermore, the clear-water production equipment is not necessary.
(c) Since the heating tanks 12a, 12b have small capacity, the temperature-regulating medium in the heating tank can be promptly heated for temperature-regulation. On the other hand, since the cooling tank 15 has large capacity, even if the temperature-regulating medium 4 at high temperature is flown into the cooling tank, the temperature is not rapidly increased (accumulator operation).
(d) Since the two systems of temperature-regulating circuits for the mold M are provided, the movable mold A and the stationary mold B can be independently subjected to temperature-regulation. Incidentally, splitting of the mold M is not limited to a mode of the movable mold A and the stationary mold B.
(e) Furthermore, since the sub temperature-regulating circuit for the lower portion C of the hopper is provided, the lower portion C of the hopper can be cooled to the suitable temperature. Moreover, in order to be able to meet this, the cooling tank 15 is sufficiently large in capacity.

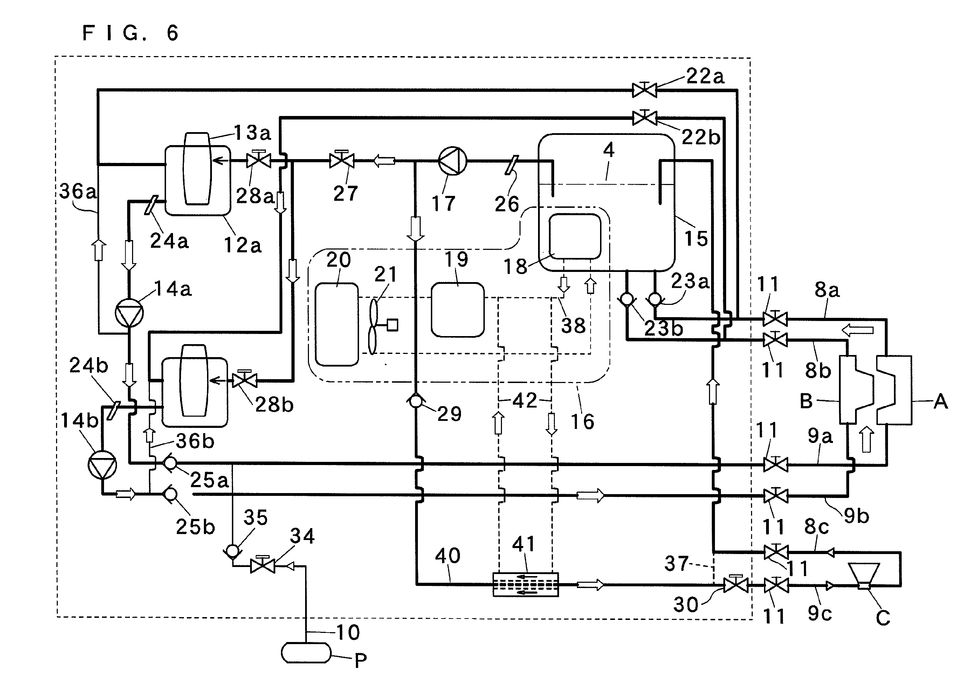

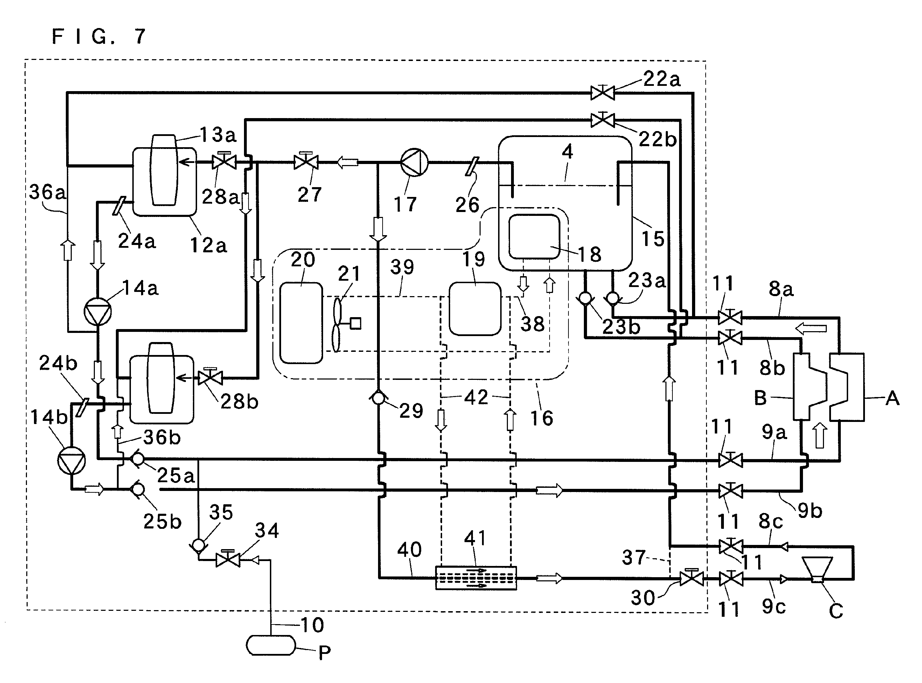

Next, a modification 1 (Fig. 6) and a modification 2 (Fig. 7) will be described below, in which only the sub temperature-regulating circuit for the lower portion C of the hopper in the foregoing embodiment is modified. The temperature of the temperature-regulating medium 4 in the cooling tank 15 is kept to be low temperature at a fixed value which is set within a range of, for example, 5 to 20°C as described before, however, in actual use in the foregoing "cooling operation", in order to efficiently cool the temperature-regulating medium 4 at high temperature which has flown from the movable mold A and the stationary mold B into the heating tanks 12a, 12b by the temperature-regulating medium 4 in the cooling tank 15, the temperature of the temperature-regulating medium 4 in the cooling tank 15 is preferably kept low to the utmost (for example, about 5 to 10°C in the foregoing range).

The temperature of the temperature-regulating medium 4 fed out from the heating tanks 12a, 12b into the movable mold A and the stationary mold B is set within a range of, for example, 5 to 95°C as describe before. In the case that if the temperature is made to be 5 to 10°C so that the movable mold A and the stationary mold B are excessively cooled and thus dewed, higher temperature (for example, a setting value set within a range of 15 to 95°C) can be set, there are not any difficulties.

On the other hand, the sub temperature-regulating circuit for the lower portion C of the hopper provided in the foregoing embodiment feeds out the temperature-regulating medium 4 from the cooling tank 15 into the lower portion C of the hopper through the medium-feeding manifold 9c without passing through any heating mean. Accordingly, when the temperature of temperature-regulating medium 4 in the cooling tank 15 is kept to be, for example, 5 to 10°C as described before, the temperature-regulating medium 4 at 5 to 10°C fed out from the tank reaches the lower portion C of the hopper without being particularly heated, and strongly cools the lower portion C of the hopper, therefore dew condensation may occur within the hopper.

Thus, in the modifications 1 and 2, the sub temperature-regulating circuit is provided with a sub heater 41 which heats the temperature-regulating medium 4 to be fed out into the lower portion C of the hopper by using heat generated in the foregoing cooling system 16. When the temperature-regulating medium 4 is heated by this sub heater 41 to a temperature in a degree that dew condensation does not occur within the hopper, the dew condensation can be prevented.

The sub heater 41 of the modification 1 shown in Fig. 6 transfers heat of the cooling medium heated by the heat exchanger 18 in the cooling system 16 to the temperature-regulating medium 4 in the sub temperature-regulating circuit. Specifically, part (or acceptably all) of the cooling medium that flows through a piping 38 from the heat exchanger 18 to the compressor 19 in the cooling system 16 is flown into the sub heater 41 attached to a piping 40 from the cooling tank 15 to the medium-feeding manifold 9c in the temperature-regulating circuit for the lower portion C of the hopper via a piping 42 to heat the temperature-regulating medium 4 to be fed into the lower portion C of the hopper, and then returned into the piping 38.

The sub heater 41 of the modification 2 shown in Fig. 7 transfers heat of the cooling medium heated by the compressor 19 in the cooling system 16 to the temperature-regulating medium 4 in the sub temperature-regulating circuit. Specifically, part of the cooling medium which flows through a piping 39 from the compressor 19 to the condenser 20 in the cooling system 16 is flown into the sub heater 41 attached to a piping 40 from the cooling tank 15 to the medium-feeding manifold 9c in the temperature-regulating circuit for the lower portion C of the hopper via a piping 42, and heat the temperature-regulating medium 4 to be fed into the lower portion C of the hopper, and then returned into a piping 38 to the compressor 19.

Since the cooling medium is heated by the heat exchanger 18 in a manner of absorbing heat of the temperature-regulating medium 4 in the cooling tank 15 (and further heated by the compressor 19), when the cooling medium is flown to the sub heater 41, the temperature-regulating medium 4 to be fed out into the lower portion C of the hopper can be heated. In the sub heater 41, the cooling medium is not mixed with the temperature-regulating medium 4. As a structure of the sub heater 41, a cylindrical sleeve that is armored on the piping 40 for the temperature-regulating medium 4 and thus configures a concentric double pipe with the piping 40, a spiral tube that is armored on the piping 40 for the temperature-regulating medium 4 in a winding way and the like can be exemplified.

According to the modifications, even if the temperature of the temperature-regulating medium 4 in the cooling tank 15 is kept to be, for example, 5 to 10°C, the temperature-regulating medium 4 to be fed into the lower portion C of the hopper can be heated by the foregoing sub heater 41 to the temperature in a degree that the dew condensation do not occur within the hopper (for example, 15 to 30°C, more preferably 20 to 25°C), therefore there is no fear that the dew condensation occurs within the hopper.

Moreover, a switching valve can be provided in the piping 42 of the sub temperature-regulating circuit so that operation and a stop of heating of the foregoing temperature-regulating medium 4 can be switched. Moreover, a flow-rate regulation valve can be provided in the piping 42 of the sub temperature-regulating circuit so that the temperature after heating of the foregoing temperature-regulating medium 4 can be regulated.

It should be understood that the present invention shall not be limited to the constitutions of said embodiments, and can be implemented with modifications without deviating from the scope of the invention as exemplified below:
(1) When the molding machine 2 (the mold M) is small, the heating tanks 12a, 12b can be small in capacity as described before, however, when the molding machine 2 (the mold M) is large, capacity of the heating tanks 12a, 12b is increased.

A mold temperature regulating apparatus includes a casing which can be located indoors. Within the casing, there are installed a heating tank through which a temperature-regulating medium returned from a mold passes, a cooling tank for storing the common temperature-regulating medium returned from the mold, a heater for heating the temperature-regulating medium in the heating tank,
a cooling system for cooling the temperature-regulating medium in the cooling tank, a confluence pump that allows the temperature-regulating medium cooled in the cooling tank to join the temperature-regulating medium in the heating tank, and a medium-feeding pump for feeding out the temperature-regulating medium discharged from the heating tank into the mold. The cooling system is configured to indirectly cool the temperature-regulating medium by a different cooling medium circulated in the casing.

## Claims

1. A mold temperature regulating apparatus for regulating a temperature of a mold by circulating a temperature-regulating medium into the mold, **characterized by** comprising;
a casing which can be located indoors,
a heating tank through which the temperature-regulating medium returned from the mold passes,
a cooling tank for storing the common temperature-regulating medium returned from the mold,
a heater for heating the temperature-regulating medium in the heating tank,
a cooling system for cooling the temperature-regulating medium in the cooling tank,
a confluence pump that allows the temperature-regulating medium cooled in the cooling tank to join the temperature-regulating medium in the heating tank, and
a medium-feeding pump for feeding out the temperature-regulating medium discharged from the heating tank into the mold,
said heating tank, said cooling tank, said heater, said cooling system, said confluence pump, and said medium-feeding pump being installed in said casing,
wherein said cooling system is configured to indirectly cool said temperature-regulating medium by a different cooling medium which circulates in said casing and is different from said temperature-regulating medium.

2. The mold temperature regulating apparatus according to claim 1, wherein said temperature-regulating medium is a liquid which generates few scale adherence and has rust prevention and corrosion prevention properties.

3. The mold temperature regulating apparatus according to claim 1 or 2, wherein said different cooling medium has excellent efficiency compared with said temperature-regulating medium.

4. The mold temperature regulating apparatus according to any one of claims 1 to 3, wherein said heating tank has relatively small capacity, and said cooling tank has relatively large capacity.

5. The mold temperature regulating apparatus according to any one of claims 1 to 4, wherein at least two heating tanks are installed in said casing, so that at least two systems of temperature-regulating circuits are provided in said apparatus.

6. The mold temperature regulating apparatus according to any one of claims 1 to 5, wherein a temperature of the temperature-regulating medium in said cooling tank is kept constant.

7. The mold temperature regulating apparatus according to any one of claims 1 to 6, wherein said apparatus further comprises a sub temperature regulating circuit for feeding out the cooled temperature-regulating medium in said cooling tank into equipment other than said mold.

8. The mold temperature regulating apparatus according to claim 7, wherein said sub temperature regulating circuit comprises a sub heater for heating said temperature-regulating medium fed out into the equipment other than the mold by using heat generated in said cooling system.

9. The mold temperature regulating apparatus according to claim 8, wherein said sub heater transfers heat of said cooling medium heated by a compressor provided in said cooling system to said temperature-regulating medium in said sub temperature regulating circuit.
